# EUROPEAN PATENT SPECIFICATION

(11) **EP 4 416 687 B1**
(45) Date of publication and mention of the grant of the patent: **25.11.2026**
(21) Application number: 22881826.6
(22) Date of filing: 14.10.2022
(51) Int. Cl.: G06T 7/60, G06T 7/00, G06N 20/00, G06T 7/33, G06T 7/73, G06V 20/69

(54) **SYSTEMS AND METHODS FOR ALIGNING DIGITAL SLIDE IMAGES**
SYSTEME UND VERFAHREN ZUR AUSRICHTUNG DIGITALER DIABILDER
SYSTÈMES ET PROCÉDÉS D'ALIGNEMENT D'IMAGES DE DIAPOSITIVES NUMÉRIQUES

(30) Priority: 16.10.2021 US 202163256575 P
(43) Date of publication of application: 21.08.2024
(73) Proprietor: Leavitt Medical, Inc., Lehi, UT 84043 (US)
(72) Inventor: IVIE, Michael Andrew, Orem, UT 84058 (US); WIRTHLIN, John Bitner, Salt Lake City, UT 84124 (US)
(74) Representative: Potter Clarkson
(86) International application number: PCT/US2022/046694
(87) International publication number: WO 2023/064547

(56) References cited:
- US-A1- 2021 097 684
- US-A1- 2021 097 684
- KAMILA CHUGHTAI ET AL: "Fiducial Markers for Combined 3-Dimensional Mass Spectrometric and Optical Tissue Imaging", ANALYTICAL CHEMISTRY, vol. 84, no. 4, 21 February 2012 (2012-02-21), pages 1817 - 1823, XP055085471, ISSN: 0003-2700, DOI: 10.1021/ac203373h
- PARK H ET AL: "Registration Methodology for Histological Sections and In Vivo Imaging of Human Prostate", ACADEMIC RADIOLOGY, ELSEVIER, AMSTERDAM, NL, vol. 15, no. 8, 1 August 2008 (2008-08-01), pages 1027 - 1039, XP022941309, ISSN: 1076-6332, [retrieved on 20080710], DOI: 10.1016/J.ACRA.2008.01.022
- SLEEMAN IV WILLIAM C. ET AL: "A Machine Learning method for relabeling arbitrary DICOM structure sets to TG-263 defined labels", JOURNAL OF BIOMEDICAL INFORMATICS, vol. 109, 8 August 2020 (2020-08-08), US, pages 103527, XP055783117, ISSN: 1532-0464, DOI: 10.1016/j.jbi.2020.103527

## Description

### BRIEF DESCRIPTION OF THE DRAWINGS

The accompanying drawings illustrate a number of example embodiments and are a part of the specification. Together with the following description, these drawings demonstrate and explain various principles of the instant disclosure.
FIG. 1 is a block diagram of an example system for aligning digital slide images.
FIG. 2 is a block diagram of an example implementation of a system for aligning digital slide images.
FIG. 3 is a flow diagram of an example method for aligning digital slide images.
FIG. 4A is a plan view and FIG. 4B is a perspective view of a sectionable fiducial marker in accordance with some embodiments described herein.
FIG. 5A is a top view of a first tissue sample slide, FIG. 5B is a top view of a second tissue sample slide, and FIG. 5C is a top view of a third tissue sample slide, in accordance with some embodiments described herein.
FIG. 6 includes a view of tissue samples and/or tissue sample slides aligned in a common orientation in accordance with some embodiments described herein.
FIG. 7 includes a view of a graphical user interface that shows sections of a tissue sample oriented within the graphical user interface in accordance with some embodiments described herein.

Throughout the drawings, identical reference characters and descriptions indicate similar, but not necessarily identical, elements. While the example embodiments described herein are susceptible to various modifications and alternative forms, specific embodiments have been shown by way of example in the drawings and will be described in detail herein. However, the example embodiments described herein are not intended to be limited to the particular forms disclosed. Rather, the instant disclosure covers all modifications, equivalents, and alternatives falling within the scope of the appended claims.

### DETAILED DESCRIPTION OF EXAMPLE EMBODIMENTS

In preparing a patient tissue sample for microscopic analysis, a pathologist may cause the tissue sample to be sectioned into multiple slices, also referred to as sections or levels. Each section or level of a tissue sample may be disposed upon a carrier medium, such as a transparent (e.g., glass) slide.

When a pathologist microscopically analyzes a tissue sample, the pathologist may find it useful to review multiple portions or sections of the sampled tissue to ensure nothing is overlooked. Some processes may require a detailed microscopic review of multiple portions of the same specimen taken from various sectioned slices or levels of the specimen. Additionally, when special stains are ordered for application to a tissue sample, all stained tissue may be reviewed in detail. Such a review may include multiple sections or levels of the tissue sample.

Furthermore, during analysis of a tissue sample, when a pathologist identifies an area of interest in one level, the pathologist may find it desirable to scrutinize corresponding areas of other levels and/or stains. Unfortunately, morphology presented by a tissue sample may vary significantly from level to level, sometimes making it difficult to visually locate corresponding points or locations across different levels. Conventional processes for identifying an area of interest at a first level, switching views to a second level, and especially identifying a location on the second level corresponding to the area of interest on the first level, may be tedious and/or prone to failure.

Additionally, to aid in and/or to facilitate some analytical processes, when using transparent (e.g., glass) slides, a pathologist may choose to overlay at least two slides and physically manipulate the slides until their corresponding sections or levels of the tissue sample are aligned (e.g., positionally and/or optically aligned) with one another. The pathologist may then mark the slides to identify areas of interest. Conventional methods of manipulation of transparent slides bearing tissue samples may be cumbersome, inconvenient, and/or prone to failure. Hence, the present application identifies and addresses a need for improved systems, methods, and apparatuses for aligning of tissue sample slide images to aid in analysis of such tissue samples.

The present disclosure generally relates to methods and systems for aligning (e.g., orienting, scaling, stretching, shrinking, resizing, keystone correction, etc.) digital slide images of a sectioned tissue sample. In some embodiments, the disclosed systems and methods may utilize at least one sectionable fiducial marker that is present in each section of the sectioned tissue sample (and therefore in each digital slide image of the respective sections of the tissue sample). Embedding sectionable fiducial markers along with the specimen (e.g., into a paraffin wax block that includes the specimen) in such a way as to ensure that the markers will consistently appear in the same position across all levels may create and/or enable common points of reference for alignment.

Embodiments of the systems and methods described herein may identify one or more sections of the sectionable fiducial marker(s) in each image to determine how to align the images to each other, including any appropriate reorienting, scaling, stretching, shrinking, etc., of the images. In some embodiments, in the aligned images, the parts of the sectioned tissue sample that originated from adjacent portions of the tissue (e.g., at each respective level) may be positioned (e.g., over each other, adjacent to each other, etc.) for simultaneous and/or overlapping viewing.

Accordingly, the methods and systems of the present disclosure may facilitate and/or improve the viewing of digital slide images of a sectioned tissue sample, such as for identification and diagnosis of abnormal tissue structures.

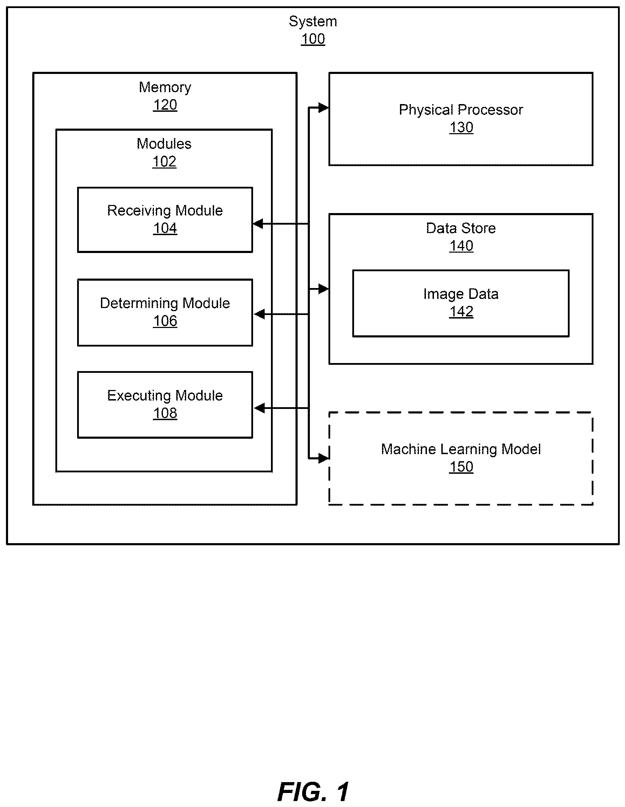

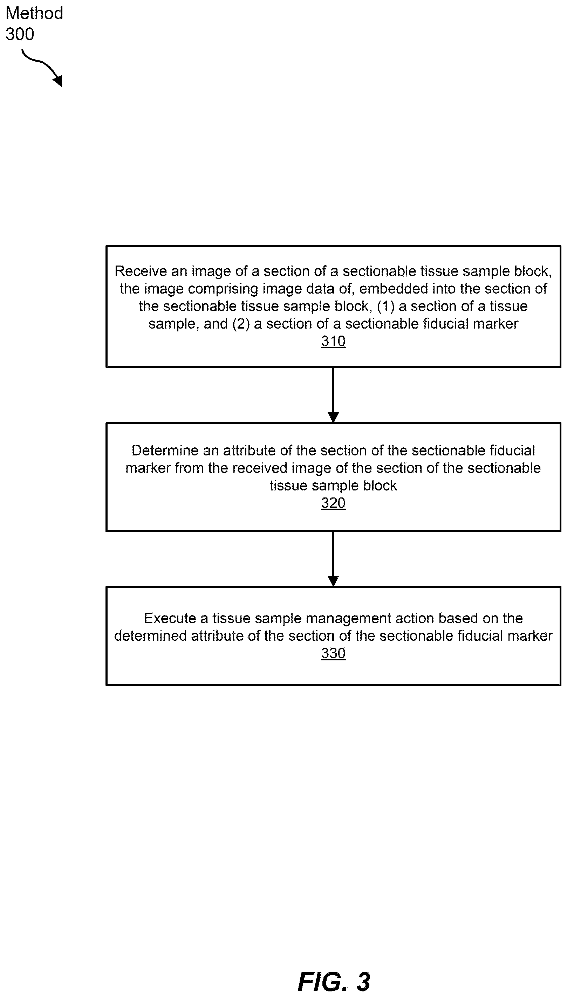

The following will provide, with reference to FIGS. 1-2 and 4-7, detailed descriptions of systems for aligning digital slide images. Detailed descriptions of corresponding computer-implemented methods will also be provided in connection with FIG. 3.

FIG. 1 is a block diagram of an example system 100 for aligning digital slide images. As illustrated in this figure, example system 100 may include one or more modules 102 for performing one or more tasks. As will be explained in greater detail below, modules 102 may include a receiving module 104 that may be configured to receive an image of a section of a sectionable tissue sample block. The image may include image data of, embedded into the section of the sectionable tissue sample block, (1) a section of a tissue sample, and (2) a section of a sectionable fiducial marker. As further shown in FIG. 1, modules 102 may also include a determining module 106 configured to determine an attribute of the section of the sectionable fiducial marker and/or an attribute of the section of the tissue sample from the received image of the section of the sectionable tissue sample block. Additionally, modules 102 may also include an executing module 108 configured to execute a tissue sample management action based on the determined attribute of the section of the sectionable fiducial marker.

As further illustrated in FIG. 1, example system 100 may also include one or more memory devices, such as memory 120. Memory 120 generally represents any type or form of volatile or non-volatile storage device or medium capable of storing data and/or computer-readable instructions. In one example, memory 120 may store, load, and/or maintain one or more of modules 102. Examples of memory 120 include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

As also shown in FIG. 1, example system 100 may also include one or more physical processors, such as physical processor 130. Physical processor 130 generally represents any type or form of hardware-implemented processing unit capable of interpreting and/or executing computer-readable instructions. In one example, physical processor 130 may access and/or modify one or more of modules 102 stored in memory 120. Additionally or alternatively, physical processor 130 may execute one or more of modules 102 to facilitate aligning of digital slide images in accordance with the systems and methods described herein. Examples of physical processor 130 include, without limitation, microprocessors, microcontrollers, central processing units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

As also shown in FIG. 1, example system 100 may further include one or more data stores, such as data store 140, that may receive, store, and/or maintain data. Data store 140 may represent portions of a single data store or computing device or a plurality of data stores or computing devices. In some embodiments, data store 140 may be a logical container for data and may be implemented in various forms (e.g., a database, a file, a file system, a data structure, etc.). Examples of data store 140 may include, without limitation, files, file systems, data stores, databases, and/or database management systems such as an operational datastore (ODS), a relational database, a No SQL database, a NewSQL database, and/or any other suitable organized collection of data.

In at least one example, data store 140 may include (e.g., store, host, access, maintain, etc.) image data 142. As will be explained in greater detail below, in some examples, image data 142 may include and/or represent any image data that may include and/or be associated with, without limitation, one or more tissue samples, one or more tissue sample blocks, one or more sections of one or more sectionable tissue sample blocks, one or more tissue sample slides, and so forth.

As further shown in FIG. 1, example system 100 may optionally include a machine learning model 150. A machine learning model may be a data analysis tool that may find patterns within and/or make predictions regarding a previously unseen dataset. In some examples, machine learning model 150 may include any suitable model and/or algorithm including, without limitation, a linear regression algorithm, a logistic regression algorithm, a support-vector machine (SVM), a nearest neighbor classifier, a principal component analysis algorithm, a decision tree, a naïve Bayes classifier, a k -means clustering algorithm, and so forth.

One machine learning model that may be particularly useful for analyzing unstructured datasets such as image data, and hence may be included as part of machine learning model 150, may be an artificial neural network. Artificial neural networks are computing systems inspired by biological neural networks. Artificial neural networks may "learn" to perform tasks by processing example or training data, often without being pre-programmed with task-specific rules. An effectively trained artificial neural network can be a powerful tool to aid in modern computing tasks such as pattern recognition, process control, data analysis, social filtering, and so forth.

An example of training of an artificial neural network from a given example may include determining a difference (e.g., error) between a processed output of the artificial neural network (e.g., a predicted result) and a target output. A training system may then adjust internal probability-weighted associations of the artificial neural network according to a learning rule and the difference between the processed output and the target output. Successive adjustments may cause the artificial neural network to produce output (e.g., one or more predictions) that is increasingly similar to the target output.

In some embodiments, an artificial neural network may include any software and/or hardware composed of interconnected processing nodes. These processing nodes, which may be referred to as "artificial neurons," may receive inputs and pass outputs to other artificial neurons. The output of each artificial neuron may be determined by a non-linear function combination of each input to the artificial neuron, and each connection between artificial neurons may be assigned a "weight" that determines the degree to which a particular connection contributes to the output of the destination neuron(s).

Artificial neural networks may be used in a variety of contexts, including, without limitation, computer vision (e.g., image recognition and object detection), natural language processing (e.g., translation and speech recognition), medical diagnosis and recommendation systems.

Artificial neural networks may be implemented in a variety of ways. In some embodiments, an artificial neural network may be implemented as software programs and/or any other suitable form of computer-readable instructions that are executed on one or more physical processors. In further embodiments, an artificial neural network may be implemented in physical hardware, such as a series of interconnected physical processors with each processor unit acting as an artificial neuron. Hence, although some examples described herein may explain and/or illustrate machine learning model 150 in the context of a software-implemented artificial neural network, machine learning model 150 may, in some examples, be implemented in any suitable physical hardware.

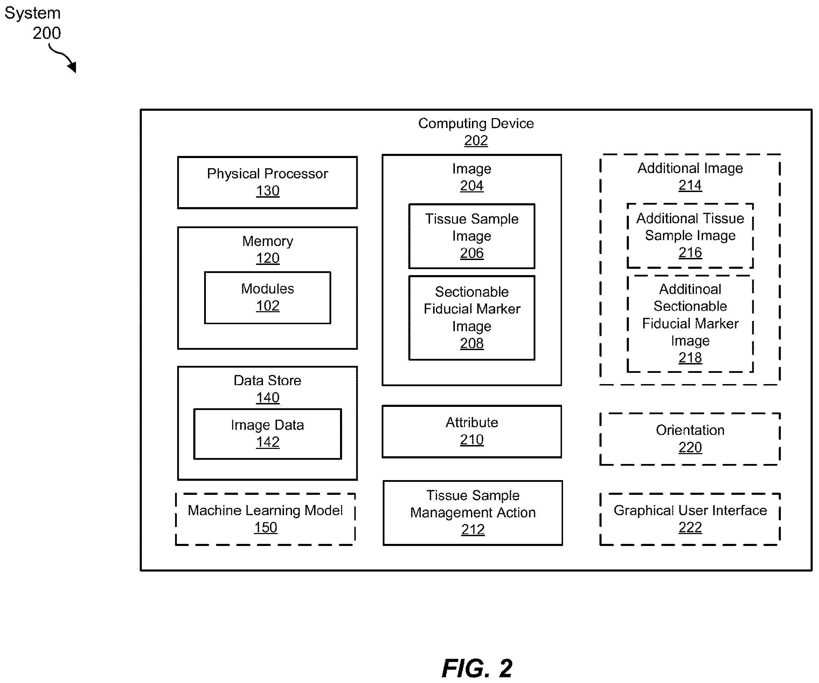

Example system 100 in FIG. 1 may be implemented in a variety of ways. For example, all or a portion of example system 100 may represent portions of an example system 200 ("system 200") in FIG. 2. As shown in FIG. 2, system 200 may include a computing device 202. In at least one example, computing device 202 may be programmed with one or more of modules 102.

In at least one embodiment, one or more modules 102 from FIG 1 may, when executed by computing device 202, enable computing device 202 to perform one or more operations to align digital slide images. For example, as will be described in greater detail below, receiving module 104 may, when executed by computing device 202, cause computing device 202 to receive an image (e.g., image 204) of a section of a sectionable tissue sample block. The received image may include image data of a section of a tissue sample embedded into a tissue sample block (e.g., tissue sample image 206) and a section of a sectionable fiducial marker embedded into the tissue sample block (e.g., sectionable fiducial marker image 208).

Additionally, determining module 106 may, when executed by computing device 202, cause computing device 202 to determine an attribute of the section of the sectionable fiducial marker (e.g., attribute 210) from the received image 204 of the section of the sectionable tissue sample block. The attribute may include any suitable attribute including, without limitation, at least one wavelength of light (e.g., color) reflected by the section of the sectionable fiducial marker, a shape of the section of the sectionable fiducial marker, an orientation of the section of the sectionable fiducial marker, or a position of the section of the sectionable fiducial marker within the section of the sectionable tissue sample block.

Determining module 106 may also, when executed by computing device 202, cause computing device 202 to determine an attribute of the section of the tissue sample from the received image 204. The attribute may include any suitable attribute including, without limitation, morphology, phenotype, shape, size, at least one wavelength of reflected light (e.g., color), etc. of the tissue sample.

In some implementations, tissue sample image 206 may include an image of a tissue array, including multiple sections of tissue from one or more patients. Determining module 106 may, when executed by computing device 202, cause computing device 202 to determine a location of each section of tissue in the tissue array relative to the section of the sectionable fiducial marker in image 204. This location information may facilitate the automatic identification of each section of tissue in the tissue array and its origin (e.g., the originating patient). In addition, the location information can facilitate the presentation of a single image or multiple images of tissue samples from an individual patient or from multiple patients for review by a user (e.g., a pathologist).

In some examples, as further shown in FIG. 2, one or more of the systems described herein may optionally include and/or perform operations involving an image of an additional section of the sectionable tissue block (e.g., additional image 214). For example, in some embodiments, receiving module 104 may optionally receive an image of an additional section of the sectionable tissue block (e.g., additional image 214) that may include an image of an additional section of the tissue sample (e.g., additional tissue sample image 216) and an image of an additional section of the sectionable fiducial marker (e.g., additional sectionable fiducial marker image 218).

Furthermore, executing module 108 may, when executed by computing device 202, cause computing device 202 to execute a tissue sample management action (e.g., tissue sample management action 212) based on the determined attribute of the section of the sectionable fiducial marker. The executing module 108 determines an orientation of the sectionable fiducial marker (e.g., orientation 220) based on the attribute of the sectionable fiducial marker (e.g., a shape of the sectionable fiducial marker, a gradient of wavelengths of light reflected by the section of the sectionable fiducial marker, etc.). The executing module 108 further presents one or more images to a user via a suitable graphical user interface (e.g., graphical user interface 222). In some examples, graphical user interface 222 may be separate from computing device 202 and in communication (e.g., wireless and/or wired communication) with computing device 202, such that the user can remotely access information (e.g., image 204 and/or additional image 214) from computing device 202.

Computing device 202 generally represents any type or form of computing device capable of reading and/or executing computer-executable instructions and/or hosting executables. Examples of computing device 202 include, without limitation, application servers, storage servers, database servers, web servers, and/or any other suitable computing device configured to run certain software applications and/or provide various application, storage, and/or database services.

In at least one example, computing device 202 may be a computing device programmed with one or more of modules 102. All or a portion of the functionality of modules 102 may be performed by computing device 202 and/or any other suitable computing system. As will be described in greater detail below, one or more of modules 102 from FIG. 1 may, when executed by at least one processor of computing device 202, may enable computing device 202 to align digital slide images (e.g., image 204 and additional image 214) in any of the ways described herein.

Many other devices or subsystems may be connected to system 100 in FIG. 1 and/or system 200 in FIG. 2. Conversely, all of the components and devices illustrated in FIGS. 1 and 2 need not be present to practice the embodiments described and/or illustrated herein. The devices and subsystems referenced above may also be interconnected in different ways from those shown in FIG. 2. Systems 100 and 200 may also employ any number of software, firmware, and/or hardware configurations. For example, one or more of the example embodiments disclosed herein may be encoded as a computer program (also referred to as computer software, software applications, computer-readable instructions, and/or computer control logic) on a computer-readable medium.

FIG. 3 is a flow diagram of an example computer-implemented method 300 for aligning digital slide images. The steps shown in FIG. 3 may be performed by any suitable computer-executable code and/or computing system, including system 100 in FIG. 1, system 200 in FIG. 2, and/or variations or combinations of one or more of the same. In one example, each of the steps shown in FIG. 3 may represent an algorithm whose structure includes and/or is represented by multiple sub-steps, some examples of which will be provided in greater detail below.

As illustrated in FIG. 3, at step 310, one or more of the systems described herein may receive an image of a section of a sectionable tissue sample block. The image may include image data of a section of a tissue sample and a section of a sectionable fiducial marker. For example, receiving module 104 may, as part of computing device 202, receive, from data store 140, an image 204 that may include a tissue sample image 206 and a sectionable fiducial marker image 208. In some examples, receiving module 104 may also receive an additional image 214, which may be adjacent to, separate from, or overlaid on image 204, as explained above.

The material forming the sectionable fiducial markers described herein may be embedded into a wax block and infused with paraffin, while not significantly changing in size or shape. The material may also be capable of being cleanly cut on a microtome without dulling the blade. By way of example and not limitation, the material forming the fiducial(s) may include a polymer material, a gelatin material, and/or a tissue mimetic material. For example, a tissue mimetic material may include biological and/or synthetic materials that mimic a biological sample. In some embodiments, the tissue mimetic material may include at least one biological cell, a protein material, and/or a lipid material. Tissue mimetic materials that are suitable for forming the sectionable fiducial(s) of this disclosure are disclosed in U.S. Patent No. 9,851,349, titled "MATRIX FOR RECEIVING A TISSUE SAMPLE AND USE THEREOF," issued Dec. 26, 2017. An example material that may be used to form the fiducial(s) may include at least one of: protein (e.g., animal protein), one or more lipids (e.g., animal fat, vegetable oil, etc.), glycerin, water, a gelling agent (e.g., an ionically gelled gelling agent), an inorganic buffer, an antifoaming agent, and/or a paraffin wax material.

In some examples, a sectionable fiducial marker may include a material or a gap in a material such that the fiducial markers are optically identifiable from surrounding material of the section (e.g., paraffin wax). For example, a sectionable fiducial marker may have a shape (e.g., rectangle, square, triangle, star-shaped, arrow-shaped, plus-shaped, circle, parallelogram, trapezoid, etc.), orientation, and/or size that can be identified. In some examples, multiple sectionable fiducial markers may be included in each section to improve and facilitate image alignment. In some embodiments, the shape, size, and orientation of the structure surrounding the tissue sample may itself be used as a fiducial for digital image alignment purposes.

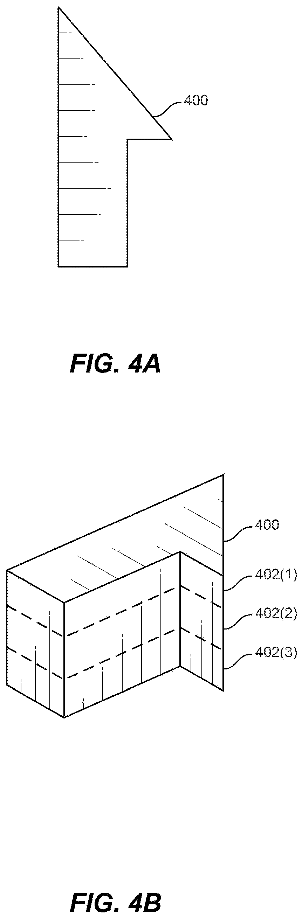

By way of example and/or illustration, FIG. 4A is a plan view of an example of a sectionable fiducial marker 400 that may be embedded within a tissue sample block in accordance with some embodiments described herein. FIG. 4B shows a perspective view of sectionable fiducial marker 400. The sectionable fiducial marker 400 may be formed from a material that may be included within and/or sectioned as part of a sectionable tissue sample block.

As shown, sectionable fiducial marker 400 may have a distinct and/or identifiable shape or aspect that may indicate a particular direction and/or orientation. Note that the shape of the sectionable fiducial marker 400 is provided as an example only and that a sectionable fiducial marker may have any suitable form, shape, and/or aspect.

As shown in FIG. 4B, the sectionable fiducial marker 400 may be sectioned (i.e., transversely sectioned) into multiple fiducial marker sections 402 (e.g., fiducial marker section 402(1), fiducial marker section 402(2), and fiducial marker section 402(3)). When the sectionable fiducial marker 400 is embedded within a tissue sample block as described herein, and when the tissue sample block is sectioned as described herein, each section of the sectioned tissue sample block may include a different fiducial marker section 402.

In additional embodiments, a tissue block may be formed, one or more holes may be formed in the tissue block, and the one or more holes may be filled with a sectionable material, which may be optically distinguishable from a surrounding material of the tissue block after sectioning is complete. By way of example, the sectionable material may include a colored paraffin wax material, a particulate material (e.g., a pigment), etc.

Using a sectionable structure to cradle or surround the tissue may provide containment that limits the area in which tissue may be found as well as a place to include markers that would correspond to the orientation of the tissue. Hence, in some embodiments, the tissue sample may be placed within a pre-formed structure including one or more sectionable fiducial markers therein. The tissue sample and structure may be processed together to form a tissue block. Hence, the sectionable fiducial marker and the tissue sample may be embedded within a sectionable tissue sample block. Sections of the tissue block, including of the tissue sample and the structure that includes the sectionable fiducial marker, may be taken (e.g., microtome sectioned) and placed on slides.

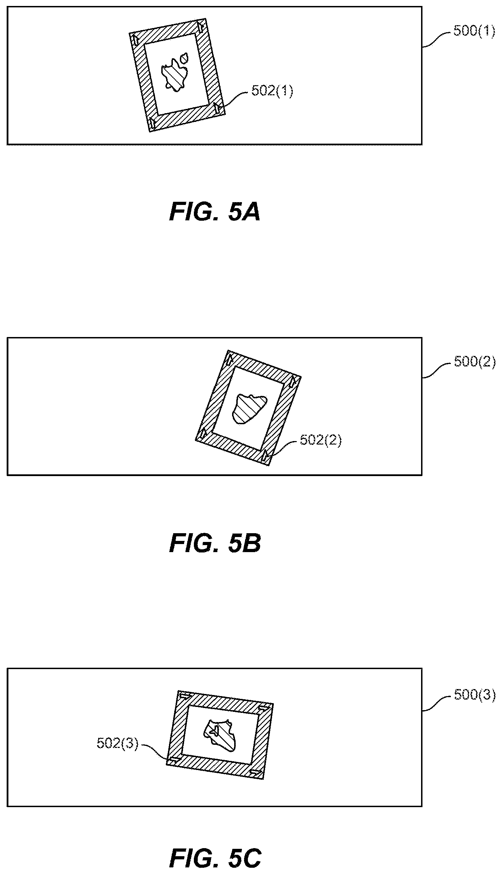

By way of illustration, FIGS. 5A through 5C show a set of tissue sample slides 500 (e.g., tissue sample slide 500(1), tissue sample slide 500(2), tissue sample slide 500(3)) that each include a different section of a sectioned tissue sample block. As shown, each slide may include a structure (e.g., a rectangular structure) at least partially surrounding a respective section of the tissue sample. The structure may be a sectionable structure that may include one or more sectionable fiducial markers. The one or more sectionable fiducial markers, either alone or in combination with each other, may have an identifiable orientation to facilitate automatic orientation of corresponding digital slide images.

In some examples, digital images may be taken (e.g., via one or more digital imaging devices) of the tissue sample slides, hence generating one or more images of one or more sections of a sectioned tissue sample block. These images may be included as part of image data 142, with each image including image data of a section of a tissue sample and image data of a section of a sectionable fiducial marker. Receiving module 104 may receive image 204 that may include the tissue sample image 206 and the sectionable fiducial marker image 208. As will be described in greater detail below, one or more of modules 102 (e.g., determining module 106) may identify fiducial markers in the images of the structure (e.g., a section of a sectionable fiducial marker), and one or more of modules 102 (e.g., executing module 108) may align at least some of the images with each other based on the location, size, and orientation of the respective fiducial markers.

Returning to FIG. 3, at step 320, one or more of the systems described herein may determine an attribute of the section of the sectionable fiducial marker from the received image of the section of the sectionable tissue sample block. For example, determining module 106 may, as part of computing device 202, determine an attribute 210 of a section of a sectionable fiducial marker from image 204 and/or sectionable fiducial marker image 208.

Attribute 210 may include any suitable attribute of a sectionable fiducial marker that may be determined from an image of a section of the sectionable fiducial marker. This may include, without limitation, a wavelength of light (e.g., color) reflected by the section of the fiducial marker, a shape of the section of the sectionable fiducial marker, an orientation of the section of the sectionable fiducial marker, a position of the section of the sectionable fiducial marker within the section of the sectionable tissue sample block, and so forth.

Determining module 106 may determine attribute 210 in a variety of contexts. For example, determining module 106 may receive and/or analyze any suitable data or metadata associated with image 204, tissue sample image 206, and/or sectionable fiducial marker image 208 to determine attribute 210 using any suitable image analysis method or technique.

In some examples, determining module 106 may determine attribute 210 by analyzing the image of the section of the sectionable tissue sample block in accordance with a machine learning model pre-trained to predict attributes of sections of sectionable fiducial markers based on images of sections of sectionable fiducial markers. As described above, a machine learning model, such as an artificial neural network, may be pre-trained (e.g., using a plurality of pre-labeled images of sections of sectionable fiducial markers) to predict attributes of sections of sectionable fiducial markers when provided with new images of sections of sectionable fiducial markers. Determining module 106 may provide sectionable fiducial marker image 208 to machine learning model 150, which may produce a prediction of an attribute of the section of the sectionable fiducial marker imaged in sectionable fiducial marker image 206. Determining module 106 may therefore assign the predicted attribute received as output from machine learning model 150 as attribute 210.

In some examples, determining module 106 may train machine learning module 150 to predict attributes of sections of sectionable fiducial markers by analyzing a plurality of pre-labeled images of sections of sectionable fiducial markers in accordance with a predefined machine learning model training method (e.g., a supervised training method). Determining module 106 may then adjust one or more attributes of the machine learning model (e.g., one or more parameters, one or more hyperparameters, one or more mathematical models, etc.) based on the analyzing of the plurality of pre-labeled images of sections of sectionable fiducial markers.

With the use of machine learning, sectionable fiducial markers can be reliably detected even with minor variations from image to image that may occur due to processing, sectioning, placement on the slide, and/or scanning.

In additional examples, determining module 106 may train machine learning module 150 to predict attributes (e.g., morphologic and/or phenotypic attributes) of sections of the tissue sample by analyzing a plurality of pre-labeled images of sections of tissue samples in accordance with a predefined machine learning model training method (e.g., a supervised training method). Determining module 106 may then adjust one or more attributes of the machine learning model (e.g., one or more parameters, one or more hyperparameters, one or more mathematical models, etc.) based on the analyzing of the plurality of pre-labeled images of sections of the tissue samples.

Returning to FIG. 3, at step 330, one or more of the systems described herein may execute a tissue sample management action based on the determined attribute of the section of the sectionable fiducial marker. For example, executing module 108 may, as part of computing device 202, execute a tissue sample management action 212 based on attribute 210.

In some examples, a tissue sample management action may include any action relative to a tissue sample that may enable a pathologist and/or tissue sample management system to access, analyze, maintain, and/or store the tissue sample. For example, the tissue sample management action 212 may include accessing a record associated with the tissue sample and stored by a tissue sample management system based on attribute 210.

In at least one embodiment, attribute 210 may include a shape of a section of a sectionable fiducial marker. In such examples, the tissue sample management action 212 may include determining, based on the shape of the section of the section of the sectionable fiducial marker, an orientation and/or position of the section of the sectionable fiducial marker within the section of the tissue sample block (e.g., orientation 220). This orientation 220 may be determined relative to the sectionable tissue sample block, a tissue sample slide that includes the section of the sectionable tissue sample block, the section of the tissue sample embedded into the section of the sectionable tissue sample block, and so forth.

The tissue sample management action 212 may further include using orientation and/or position of the sectionable fiducial marker (e.g., orientation 220) to calculate a transformation that effectively becomes the offset, rotation, stretch, skew, or flip necessary to orient the image within a unified coordinate system. In examples where there are multiple images included in a set (e.g., at least an image 204 and an additional image 214) the unified coordinate system may be common to all images in the set. The unified coordinate system may then be used (e.g., by executing module 108) to align the images of the various sections of the tissue sample. This method may work equally well for different levels and different stain types, provided the images all originated from the same paraffin block and include the structure with the fiducial markers.

In additional examples, tissue sample management action 212 executed by executing module 108 may include an action based on one or more attributes (e.g., morphologic and/or phenotypic attributes) of the tissue sample determined by determining module 106. For example, tissue sample management action 212 may include routing tissue sample image 206 to a particular pathologist and/or to a particular algorithm for review and potential diagnosis. If determining module 106 determines that the tissue sample image 206 indicates a high likelihood of abnormal tissue, the tissue sample image 206 could be categorized as a complex case requiring careful review by a pathologist and/or another specialized image analysis alrgorithm. Thus, tissue sample management action 212 may route a complex image review task to a specialist for the tissue type associated with the tissue sample image 206. In another example, a number of complex image review tasks may be routed to various respective pathologists according to a predetermined workload (e.g., evenly or substantially evenly) or to multiple pathologists for diagnostic confirmation.

By way of illustration, returning to FIGS. 5A-5C, FIGS. 5A-5C show a set of tissue sample slides 500 (e.g., tissue sample slide 500(1), tissue sample slide 500(2), tissue sample slide 500(3)) that each include a different section of a tissue sample block. As shown, the tissue sample block included sectionable fiducial markers that indicate a common orientation for the different sections of the tissue sample block. As an illustration, sections 502 (e.g., section 502(1), section 502(2), and section 502(3)) may each represent a different section of a sectionable fiducial marker that was included in the tissue sample block prior to sectioning of the tissue sample block. Using the systems and methods described herein, one or more of modules 102 (e.g., executing module 108) may determine a common orientation and/or a unified coordinate system for the tissue sample slides 500. FIG. 600 includes a view 600 that illustrates an actual or virtual aligning of tissue sample slides 500 in a determined common orientation and/or within a determined unified coordinate system.

In some examples, executing module 108 may execute tissue sample management action 212 by further presenting, via a graphical user interface 222, tissue sample image 206 oriented within the graphical user interface 222 based on the determined orientation of the section of the sectionable fiducial marker included in sectionable fiducial marker image 208.

Additionally or alternatively, as mentioned throughout the present application, embodiments of the present invention may be used to view and/or compare images of multiple different sections of sectionable tissue sample blocks. In such embodiments, tissue sample management action 212 may include determining an orientation of different sections of a sectionable fiducial marker included in different sections from a sectionable tissue sample block, images of which may be included in, e.g., the image 204 and/or the additional image 214. Hence, in some examples, executing module 108 may execute tissue sample management action 212 by presenting, via a graphical user interface such as graphical user interface 222, (1) tissue sample image 206 oriented within graphical user interface 222 based on the determined orientation of the section of the sectionable fiducial marker included in sectionable fiducial marker image 208, and (2) additional tissue sample image 216 oriented within graphical user interface 222 based on the determined orientation of the additional section of the sectionable fiducial marker included in additional sectionable fiducial marker image 218.

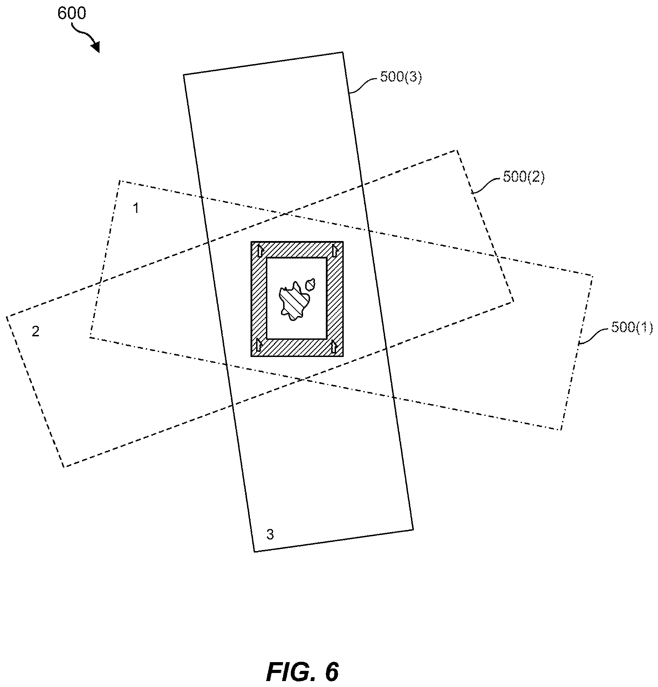

Using the unified coordinate system mentioned above, multiple images from the set can be displayed within the graphical user interface 222 overlapping in the same window (e.g., like tissue sample slides 500 in view 600 of FIG. 6). Additionally, or alternatively, multiple images from the same set may be presented within graphical user interface 222 simultaneously in different windows with the same orientation relative to the tissue sample, despite potential misalignment on the original slides (e.g., as shown in FIGS. 5A-5C).

Executing module 108 presents tissue sample image 206 and additional tissue sample image 216 aligned in a common orientation based on the determined orientation of the section of the sectionable fiducial marker included in sectionable fiducial marker image 208 and the determined orientation of the additional section of the sectionable fiducial marker included in additional sectionable fiducial marker image 218. In some embodiments, this may include overlying tissue sample image 206 and additional tissue sample image 216 within graphical user interface 222 and/or positioning tissue sample image 206 adjacent to and in a same orientation as additional tissue sample image 216.

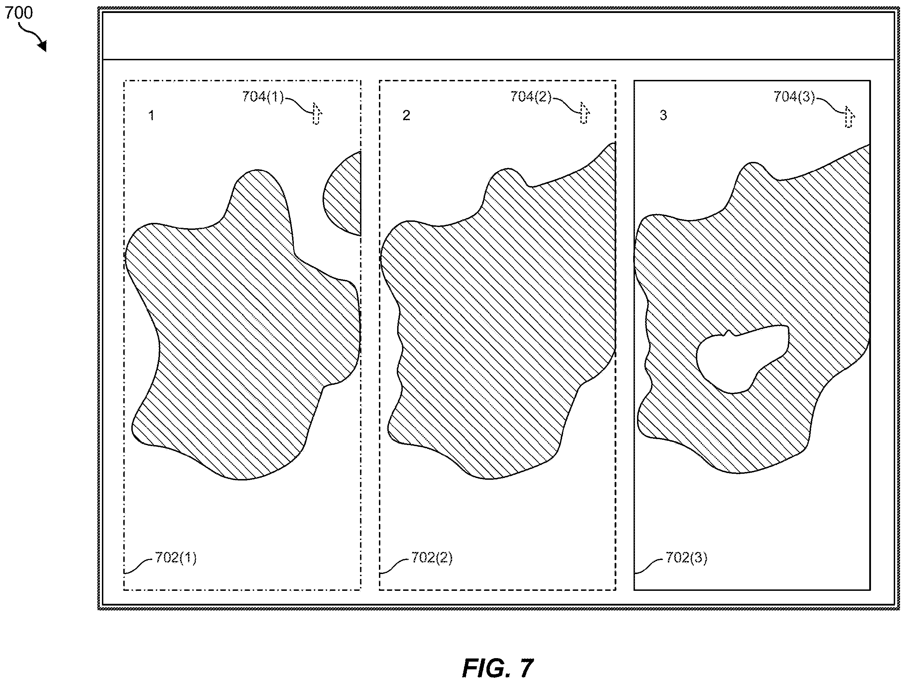

By way of illustration, FIG. 7 shows a view 700 of a graphical user interface, such as graphical user interface 222. In this example, three different tissue sample section images 702 (e.g., tissue sample section image 702(1), tissue sample section image 702(2), and tissue sample section image 702(3)) are displayed in different windows with the same orientation relative to the tissue sample despite potential misalignment on the original slides. As shown, an orientation of tissue sample images 702 may be determined based on an image of a section of a sectionable fiducial marker 704 (e.g., section 704(1), section 704(2), and section 704(3)). Each of the tissue sample images 702 may be associated with a different image of a different section of the same sectionable fiducial marker (e.g., section 704(1) may be associated with tissue sample section 702(1), section 704(2) may be associated with tissue sample section 702(2), and section 704(3) may be associated with tissue sample section 702(3)). As indicated by dashed lines in FIG. 7, images of sectionable fiducial marker 704 may optionally be included in and/or presented along with tissue sample section images 702. In other examples, images of sections 704 may be omitted.

In some examples, a user (e.g., a pathologist) may interact with the graphical user interface 222 by moving one of the images. In response, executing module 108 may cause one or more of the other images to automatically move to a corresponding secondary tissue sample location. Hence, embodiments of the methods and systems of the present disclosure may allow for synchronized panning and zooming across two or more images. The effect may appear very natural to the user and may save significant time for the pathologist in reviewing all levels in a case.

In addition, the pathologist may compare tissue samples stained by a standard stain (e.g., an "H&E" stain) side-by-side (or overlapping) with tissue samples of the same region stained by a special stain. Embodiments of the present disclosure may also help ensure compliance with best practices (e.g., by reducing the likelihood that a pathologist will fail to review every level of a tissue sample).

In additional embodiments, executing module 108 may enable a user to interact with graphical user interface 222 by automatically transferring and/or displaying slide annotations entered by the user across multiple images. Annotations from one image can be displayed with transparency ("ghosted") in the corresponding regions of other images. Hence, embodiments of the systems and methods described herein may facilitate a digital or virtual equivalent of an analog or real-world ink dot technique used by pathologists to overlay identified foci on transparent (e.g., glass) slides, but with increased accuracy, redundancy, and speed.

The ghosting of the annotations across images may also be used to build training data sets for additional machine learning models. For example, two or more of the images 702 may represent tissue stained with different stains. When tissue of interest (e.g., abnormal tissue) is identified and annotated in one of the images 702 of tissue stained with a first stain, the annotations may be transferred to another image 702 of the tissue stained with a second, different stain. The transferred annotations can be added to a training data set for a machine learning model that may be specifically designed to review images of tissue stained with the second, different stain.

As discussed throughout the instant disclosure, the disclosed systems and methods may provide one or more advantages over traditional options for aligning and/or presenting tissue sample images and/or slides. Embodiments of the present disclosure may be employed to automatically align digital slide images, without the need for user intervention (e.g., identifying similar and/or overlapping tissue structures at the different levels, scaling images, etc.). In addition, in some examples, the methods and systems of the present disclosure may, by identifying and using sectionable fiducial markers for alignment, more accurately align images compared to conventional techniques that may use tissue structures for alignment.

Other potential applications and/or embodiments may include Z-plane stacking (e.g., review of a third-dimension plane of focus simultaneously) or, instead of viewing multiple images side-by-side, scrolling through overlayed linked images in a single window.

As detailed above, the computing devices and systems described and/or illustrated herein broadly represent any type or form of computing device or system capable of executing computer-readable instructions, such as those contained within the modules described herein. In their most basic configuration, these computing device(s) may each include at least one memory device and at least one physical processor.

Although illustrated as separate elements, the modules described and/or illustrated herein may represent portions of a single module or application. In addition, in certain embodiments one or more of these modules may represent one or more software applications or programs that, when executed by a computing device, may cause the computing device to perform one or more tasks. For example, one or more of the modules described and/or illustrated herein may represent modules stored and configured to run on one or more of the computing devices or systems described and/or illustrated herein. One or more of these modules may also represent all or portions of one or more special-purpose computers configured to perform one or more tasks.

In addition, one or more of the modules described herein may transform data, physical devices, and/or representations of physical devices from one form to another. For example, one or more of the modules recited herein may receive image data to be transformed, transform the image data, output a result of the transformation to align tissue slide images included in the image data, use the result of the transformation to present aligned tissue slide images included in the image data, and store the result of the transformation to train a machine learning model to recognize images of sectionable fiducial markers. Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

The term "computer-readable medium," as used herein, generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various example methods described and/or illustrated herein may also omit one or more of the steps described or illustrated herein or include additional steps in addition to those disclosed.

The preceding description has been provided to enable others skilled in the art to best utilize various aspects of the example embodiments disclosed herein. This example description is not intended to be exhaustive or to be limited to any precise form disclosed. Many modifications and variations are possible without departing from the scope of the claims. The embodiments disclosed herein should be considered in all respects illustrative and not restrictive. Reference should be made to the appended claims and their equivalents in determining the scope of the instant disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. A computer-implemented method (300) comprising:
receiving (310) an image (204) of a section of a sectionable tissue sample block, the image (204) comprising image data of, embedded into the section of the sectionable tissue sample block:
a section of a tissue sample (206); and
a section of a sectionable fiducial marker (208);
determining (320) an attribute (210) of the section of the sectionable fiducial marker from the received image (204) of the section of the sectionable tissue sample block;
determining an orientation (220) of the section of the sectionable fiducial marker based on the determined attribute (210) of the section of the sectionable fiducial marker; and
presenting, via a graphical user interface (222), the image data (206) of the section of the tissue sample, wherein the image data (206) of the section of the tissue sample is oriented, within the graphical user interface (222), in a common orientation, aligned with image data (216) of an additional section of the tissue sample, that is based on the determined orientation (220) of the section of the sectionable fiducial marker and a determined orientation of an additional section of the sectionable fiducial marker associated with the additional section of the tissue sample; wherein:
determining (320) the attribute (210) of the section of the sectionable fiducial marker from the received image of the section of the sectionable tissue sample block comprises analyzing the image of the section of the sectionable tissue sample block in accordance with a machine learning model pre-trained to predict attributes of sections of sectionable fiducial markers based on images of sections of sectionable fiducial markers; and
the machine learning model is pre-trained by analyzing a plurality of pre-labeled images of sections of sectionable fiducial markers in accordance with a predefined machine learning model training method, and adjusting one or more attributes of the machine learning model based on the analyzing of the plurality of pre-labeled images of sections of sectionable fiducial markers, such that sectionable fiducial markers can be reliably detected even with minor variations from image to image that may occur due to processing, sectioning, placement on the slide, and / or scanning.

2. The computer-implemented method (300) of claim 1, wherein determining (320) the attribute (210) of the section of the sectionable fiducial marker from the received image (204) of the section of the sectionable tissue sample block comprises determining at least one of:
at least one wavelength of light reflected by the section of the sectionable fiducial marker;
a shape of the section of the sectionable fiducial marker;
an orientation of the section of the sectionable fiducial marker; or
a position of the section of the sectionable fiducial marker within the section of the sectionable tissue sample block.

3. The computer-implemented method (300) of claim 1 or claim 2, wherein determining the orientation (220) of the section of the sectionable fiducial marker comprises determining the orientation (220) relative to at least one of:
the sectionable tissue sample block;
a tissue sample slide that includes the section of the sectionable tissue sample block; or
the section of the tissue sample embedded into the section of the sectionable tissue sample block.

4. The computer-implemented method (300) of any preceding claim, wherein the section of the sectionable fiducial marker is formed in an identifiable shape indicative of a particular direction.

5. The computer-implemented method (300) of claim 4, wherein the identifiable shape is an arrow shape comprising a pointed end indicative of the particular direction.

6. The computer-implemented method (300) of any preceding claim, further comprising:
receiving an additional image (214) of an additional section of the sectionable tissue sample block, the additional image (214) comprising the image data of, embedded into the additional section of the sectionable tissue sample block:
the additional section of the tissue sample (216); and
the additional section of the sectionable fiducial marker (218); and
determining the orientation of the additional section of the sectionable fiducial marker by determining the orientation of the additional section of the sectionable fiducial marker relative to at least one of:
the sectionable tissue sample block;
an additional tissue sample slide that includes the additional section of the sectionable tissue sample block; or
the additional section of the tissue sample embedded into the additional section of the sectionable tissue sample block.

7. The computer-implemented method (300) of claim 6, further comprising presenting, via the graphical user interface (222), the image data of the additional section of the tissue sample, wherein the orientation of the image data of the additional section of the tissue sample is oriented, within the graphical user interface (222), in the common orientation, aligned with the image data of the section of the tissue sample.

8. The computer-implemented method (300) of claim 7, wherein presenting the image data of the section of the tissue sample and the image data of the additional section of the tissue sample aligned in the common orientation comprises overlaying the image data of the section of the tissue sample with the image data of the additional section of the tissue sample.

9. The computer-implemented method (300) of claim 8, further comprising scrolling through the overlayed image data of the section of the tissue sample and the additional section of the tissue sample.

10. The computer-implemented method (300) of any preceding claim, further comprising:
receiving an annotation from a user relative to a portion of the image data of the section of the tissue sample;
transferring the annotation to a corresponding portion of the image data of the additional section of the tissue sample; and
adding the transferred annotation to a training data set for a machine learning model for analyzing image data of tissue samples that share at least one attribute with the additional section of the tissue sample.

11. A system (100) comprising:
a receiving module (104), stored in memory and configured to receive an image of a section of a sectionable tissue sample block, the image comprising image data of, embedded into the section of the sectionable tissue sample block:
a section of a tissue sample; and
a section of a sectionable fiducial marker;
a determining module (106), stored in memory and configured to determine an attribute of the section of the sectionable fiducial marker from the received image of the section of the sectionable tissue sample block; and
an executing module (108), stored in memory and configured to:
determine an orientation of the section of the sectionable fiducial marker based on the determined attribute of the section of the sectionable fiducial marker; and
present, via a graphical user interface, the image data of the section of the tissue sample, wherein the image data of the section of the tissue sample is oriented, within the graphical user interface, in a common orientation, aligned with image data of an additional section of the tissue sample, that is based on the determined orientation of the section of the sectionable fiducial marker and a determined orientation of an additional section of the sectionable fiducial marker associated with the additional section of the tissue sample; and
at least one physical processor (130) that executes the receiving module (104), the determining module (106), and the executing module (108); wherein:
the determining module (106) is configured to determine the attribute (210) of the section of the sectionable fiducial marker from the received image of the section of the sectionable tissue sample block by analyzing the image of the section of the sectionable tissue sample block in accordance with a machine learning model (150) pre-trained to predict attributes of sections of sectionable fiducial markers based on images of sections of sectionable fiducial markers; and
the determining module (106) is configured to pre-train the machine learning module (150) by analyzing a plurality of pre-labeled images of sections of sectionable fiducial markers in accordance with a predefined machine learning model training method, and adjusting one or more attributes of the machine learning model based on the analyzing of the plurality of pre-labeled images of sections of sectionable fiducial markers, such that sectionable fiducial markers can be reliably detected even with minor variations from image to image that may occur due to processing, sectioning, placement on the slide, and / or scanning.

12. The system (100) of claim 11, wherein the determining module (106) determines the attribute of the section of the sectionable fiducial marker from the received image of the section of the sectionable tissue sample block by determining at least one of:
at least one wavelength of light reflected by the section of the sectionable fiducial marker;
a shape of the section of the sectionable fiducial marker;
an orientation of the section of the sectionable fiducial marker; or
a position of the section of the sectionable fiducial marker within the section of the sectionable tissue sample block.

13. The system (100) of claim 11 or claim 12, wherein the executing module (108) determines the orientation (220) of the section of the sectionable fiducial marker by determining the orientation (220) relative to at least one of:
the sectionable tissue sample block;
a tissue sample slide that includes the section of the sectionable tissue sample block; or
the section of the tissue sample embedded into the section of the sectionable tissue sample block.

14. The system (100) of any of claims 11-13, wherein the section of the sectionable fiducial marker is formed in an identifiable shape indicative of a particular direction.

## Patentansprüche

1. Computerimplementiertes Verfahren (300), umfassend:
Empfangen (310) eines Bilds (204) eines Abschnitts eines schneidbaren Gewebeprobenblocks, das Bild (204) umfassend Bilddaten von, eingebettet in den Abschnitt des schneidbaren Gewebeprobenblocks:
einem Abschnitt einer Gewebeprobe (206); und
einem Abschnitt einer schneidbaren Referenzmarkierung (208);
Bestimmen (320) eines Attributs (210) des Abschnitts der schneidbaren Referenzmarkierung aus dem empfangenen Bild (204) des Abschnitts des schneidbaren Gewebeprobenblocks;
Bestimmen einer Ausrichtung (220) des Abschnitts der schneidbaren Referenzmarkierung basierend auf dem bestimmten Attribut (210) des Abschnitts der schneidbaren Referenzmarkierung; und
Darstellen, über eine grafische Bedienerschnittstelle (222), der Bilddaten (206) des Abschnitts der Gewebeprobe, wobei die Bilddaten (206) des Abschnitts der Gewebeprobe innerhalb der grafischen Bedienerschnittstelle (222) in einer gemeinsamen Ausrichtung, abgestimmt auf Bilddaten (216) eines zusätzlichen Abschnitts der Gewebeprobe, ausgerichtet sind, die auf der bestimmten Ausrichtung (220) des Abschnitts der schneidbaren Referenzmarkierung und einer bestimmten Ausrichtung eines zusätzlichen Abschnitts der schneidbaren Referenzmarkierung, die dem zusätzlichen Abschnitt der Gewebeprobe zugeordnet ist, basiert; wobei:
das Bestimmen (320) des Attributs (210) des Abschnitts der schneidbaren Referenzmarkierung aus dem empfangenen Bild des Abschnitts des schneidbaren Gewebeprobenblocks ein Analysieren des Bilds des Abschnitts des schneidbaren Gewebeprobenblocks gemäß einem Maschinenlernmodell umfasst, das vortrainiert ist, um Attribute von Abschnitten von schneidbaren Referenzmarkierungen basierend auf Bildern von Abschnitten von schneidbaren Referenzmarkierungen vorherzusagen; und
das Maschinenlernmodell durch Analysieren einer Vielzahl von vorgekennzeichneten Bildern von Abschnitten von schneidbaren Referenzmarkierungen gemäß einem vordefinierten Maschinenlernmodelltrainingsverfahren und Anpassen eines oder mehrerer Attribute des Maschinenlernmodells basierend auf dem Analysieren der Vielzahl von vorgekennzeichneten Bildern von Abschnitten von schneidbaren Referenzmarkierungen derart vortrainiert wird, dass schneidbare Referenzmarkierungen selbst bei geringfügigen Variationen von Bild zu Bild, die aufgrund von Verarbeitung, Schneiden, Platzierung auf dem Objektträger und/oder Scannen auftreten können, zuverlässig detektiert werden können.

2. Computerimplementiertes Verfahren (300) nach Anspruch 1, wobei das Bestimmen (320) des Attributs (210) des Abschnitts der schneidbaren Referenzmarkierung aus dem empfangenen Bild (204) des Abschnitts des schneidbaren Gewebeprobenblocks das Bestimmen von mindestens einer umfasst von:
mindestens einer Wellenlänge von Licht, das durch den Abschnitt der schneidbaren Referenzmarkierung reflektiert wird;
einer Form des Abschnitts der schneidbaren Referenzmarkierung;
einer Ausrichtung des Abschnitts der schneidbaren Referenzmarkierung; oder
einer Position des Abschnitts der schneidbaren Referenzmarkierung innerhalb des Abschnitts des schneidbaren Gewebeprobenblocks.

3. Computerimplementiertes Verfahren (300) nach Anspruch 1 oder 2, wobei das Bestimmen der Ausrichtung (220) des Abschnitts der schneidbaren Referenzmarkierung das Bestimmen der Ausrichtung (220) relativ zu mindestens einem umfasst von:
dem schneidbaren Gewebeprobenblock;
einem Gewebeprobenobjektträger, der den Abschnitt des schneidbaren Gewebeprobenblocks einschließt; oder
dem Abschnitt der Gewebeprobe, eingebettet in den Abschnitt des schneidbaren Gewebeprobenblocks.

4. Computerimplementiertes Verfahren (300) nach einem der vorstehenden Ansprüche, wobei der Abschnitt der schneidbaren Referenzmarkierung in einer identifizierbaren Form, die eine spezielle Richtung angibt, ausgebildet ist.

5. Computerimplementiertes Verfahren (300) nach Anspruch 4, wobei die identifizierbare Form eine Pfeilform ist, umfassend ein spitzes Ende, das die spezielle Richtung angibt.

6. Computerimplementiertes Verfahren (300) nach einem der vorstehenden Ansprüche, ferner umfassend:
Empfangen eines zusätzlichen Bilds (214) eines zusätzlichen Abschnitts des schneidbaren Gewebeprobenblocks, das zusätzliche Bild (214) umfassend die Bilddaten von, eingebettet in den zusätzlichen Abschnitt des schneidbaren Gewebeprobenblocks:
dem zusätzlichen Abschnitt der Gewebeprobe (216); und
dem zusätzlichen Abschnitt der schneidbaren Referenzmarkierung (218); und
Bestimmen der Ausrichtung des zusätzlichen Abschnitts der schneidbaren Referenzmarkierung durch Bestimmen der Ausrichtung des zusätzlichen Abschnitts der schneidbaren Referenzmarkierung relativ zu mindestens einem von:
dem schneidbaren Gewebeprobenblock;
einem zusätzlichen Gewebeprobenobjektträger, der den zusätzlichen Abschnitt des schneidbaren Gewebeprobenblocks einschließt; oder
dem zusätzlichen Abschnitt der Gewebeprobe, eingebettet in den zusätzlichen Abschnitt des schneidbaren Gewebeprobenblocks.

7. Computerimplementiertes Verfahren (300) nach Anspruch 6, ferner umfassend das Darstellen, über die grafische Bedienerschnittstelle (222), der Bilddaten des zusätzlichen Abschnitts der Gewebeprobe, wobei die Ausrichtung der Bilddaten des zusätzlichen Abschnitts der Gewebeprobe innerhalb der grafischen Bedienerschnittstelle (222) in der gemeinsamen Ausrichtung, abgestimmt auf die Bilddaten des Abschnitts der Gewebeprobe, ausgerichtet ist.

8. Computerimplementiertes Verfahren (300) nach Anspruch 7, wobei das Darstellen der Bilddaten des Abschnitts der Gewebeprobe und der Bilddaten des zusätzlichen Abschnitts der Gewebeprobe, abgestimmt in der gemeinsamen Ausrichtung, ein Überlagern der Bilddaten des Abschnitts der Gewebeprobe mit den Bilddaten des zusätzlichen Abschnitts der Gewebeprobe umfasst.

9. Computerimplementiertes Verfahren (300) nach Anspruch 8, ferner umfassend ein Scrollen durch die überlagerten Bilddaten des Abschnitts der Gewebeprobe und des zusätzlichen Abschnitts der Gewebeprobe.

10. Computerimplementiertes Verfahren (300) nach einem der vorstehenden Ansprüche, ferner umfassend:
Empfangen einer Annotation von einem Benutzer bezüglich eines Teils der Bilddaten des Abschnitts der Gewebeprobe;
Übertragen der Annotation auf einen entsprechenden Teil der Bilddaten des zusätzlichen Abschnitts der Gewebeprobe; und
Hinzufügen der übertragenen Annotation zu einem Trainingsdatensatz für ein Maschinenlernmodell zum Analysieren von Bilddaten von Gewebeproben, die mindestens ein Attribut mit dem zusätzlichen Abschnitt der Gewebeprobe teilen.

11. System (100), umfassend:
ein Empfangsmodul (104), das in einem Speicher gespeichert und konfiguriert ist, um ein Bild eines Abschnitts eines schneidbaren Gewebeprobenblocks zu empfangen, das Bild umfassend Bilddaten von, eingebettet in den Abschnitt des schneidbaren Gewebeprobenblocks:
einem Abschnitt einer Gewebeprobe; und
einem Abschnitt einer schneidbaren Referenzmarkierung;
ein Bestimmungsmodul (106), das in dem Speicher gespeichert und konfiguriert ist, um ein Attribut des Abschnitts der schneidbaren Referenzmarkierung aus dem empfangenen Bild des Abschnitts des schneidbaren Gewebeprobenblocks zu bestimmen; und
ein Ausführungsmodul (108), das in dem Speicher gespeichert und konfiguriert ist zum:
Bestimmen einer Ausrichtung des Abschnitts der schneidbaren Referenzmarkierung basierend auf dem bestimmten Attribut des Abschnitts der schneidbaren Referenzmarkierung; und
Darstellen, über eine grafische Bedienerschnittstelle, der Bilddaten des Abschnitts der Gewebeprobe, wobei die Bilddaten des Abschnitts der Gewebeprobe innerhalb der grafischen Bedienerschnittstelle in einer gemeinsamen Ausrichtung, abgestimmt auf Bilddaten eines zusätzlichen Abschnitts der Gewebeprobe, ausgerichtet sind, die auf der bestimmten Ausrichtung des Abschnitts der schneidbaren Referenzmarkierung und einer bestimmten Ausrichtung eines zusätzlichen Abschnitts der schneidbaren Referenzmarkierung, die dem zusätzlichen Abschnitt der Gewebeprobe zugeordnet ist, basiert; und
mindestens einen physischen Prozessor (130), der das Empfangsmodul (104), das Bestimmungsmodul (106) und das Ausführungsmodul (108) ausführt; wobei:
das Bestimmungsmodul (106) konfiguriert ist, um das Attribut (210) des Abschnitts der schneidbaren Referenzmarkierung aus dem empfangenen Bild des Abschnitts des schneidbaren Gewebeprobenblocks durch Analysieren des Bilds des Abschnitts des schneidbaren Gewebeprobenblocks gemäß einem Maschinenlernmodell (150) zu bestimmen, das vortrainiert ist, um Attribute von Abschnitten von schneidbaren Referenzmarkierungen basierend auf Bildern von Abschnitten von schneidbaren Referenzmarkierungen vorherzusagen; und
das Bestimmungsmodul (106) konfiguriert ist, um das Maschinenlernmodul (150) durch Analysieren einer Vielzahl von vorgekennzeichneten Bildern von Abschnitten von schneidbaren Referenzmarkierungen gemäß einem vordefinierten Maschinenlernmodelltrainingsverfahren und Anpassen eines oder mehrerer Attribute des Maschinenlernmodells basierend auf dem Analysieren der Vielzahl von vorgekennzeichneten Bildern von Abschnitten von schneidbaren Referenzmarkierungen derart vorzutrainieren, dass schneidbare Referenzmarkierungen selbst bei geringfügigen Variationen von Bild zu Bild, die aufgrund von Verarbeitung, Schneiden, Platzierung auf dem Objektträger und/oder Scannen auftreten können, zuverlässig detektiert werden können.

12. System (100) nach Anspruch 11, wobei das Bestimmungsmodul (106) das Attribut des Abschnitts der schneidbaren Referenzmarkierung aus dem empfangenen Bild des Abschnitts des schneidbaren Gewebeprobenblocks durch Bestimmen von mindestens einer bestimmt von:
mindestens einer Wellenlänge von Licht, das durch den Abschnitt der schneidbaren Referenzmarkierung reflektiert wird;
einer Form des Abschnitts der schneidbaren Referenzmarkierung;
einer Ausrichtung des Abschnitts der schneidbaren Referenzmarkierung; oder
einer Position des Abschnitts der schneidbaren Referenzmarkierung innerhalb des Abschnitts des schneidbaren Gewebeprobenblocks.

13. System (100) nach Anspruch 11 oder 12, wobei das Ausführungsmodul (108) die Ausrichtung (220) des Abschnitts der schneidbaren Referenzmarkierung durch Bestimmen der Ausrichtung (220) relativ zu mindestens einem bestimmt von:
dem schneidbaren Gewebeprobenblock;
einem Gewebeprobenobjektträger, der den Abschnitt des schneidbaren Gewebeprobenblocks einschließt; oder
dem Abschnitt der Gewebeprobe, eingebettet in den Abschnitt des schneidbaren Gewebeprobenblocks.

14. System (100) nach einem der Ansprüche 11 bis 13, wobei der Abschnitt der schneidbaren Referenzmarkierung in einer identifizierbaren Form, die eine spezielle Richtung angibt, ausgebildet ist.

## Revendications

1. Procédé mis en œuvre par ordinateur (300) comprenant :
la réception (310) d'une image (204) d'une section d'un bloc d'échantillon de tissu sectionnable, l'image (204) comprenant des données d'image, incorporées dans la section du bloc d'échantillon de tissu sectionnable :
d'une section d'un échantillon de tissu (206) ; et
d'une section d'un marqueur de repère sectionnable (208) ;
la détermination (320) d'un attribut (210) de la section du marqueur de repère sectionnable à partir de l'image reçue (204) de la section du bloc d'échantillon de tissu sectionnable ;
la détermination d'une orientation (220) de la section du marqueur de repère sectionnable sur la base de l'attribut (210) déterminé de la section du marqueur de repère sectionnable ; et
la présentation, par l'intermédiaire d'une interface utilisateur graphique (222), des données d'image (206) de la section de l'échantillon de tissu, dans lequel les données d'image (206) de la section de l'échantillon de tissu sont orientées, dans l'interface utilisateur graphique (222), dans une orientation commune, alignées sur des données d'image (216) d'une section supplémentaire de l'échantillon de tissu, qui est basée sur l'orientation (220) déterminée de la section du marqueur de repère sectionnable et une orientation déterminée d'une section supplémentaire du marqueur de repère sectionnable associée à la section supplémentaire de l'échantillon de tissu ; dans lequel :
la détermination (320) de l'attribut (210) de la section du marqueur de repère sectionnable à partir de l'image reçue de la section du bloc d'échantillon de tissu sectionnable comprend l'analyse de l'image de la section du bloc d'échantillon de tissu sectionnable conformément à un modèle d'apprentissage automatique pré-entraîné pour prédire des attributs de sections de marqueurs de repère sectionnables sur la base d'images de sections de marqueurs de repère sectionnables ; et
le modèle d'apprentissage automatique est pré-entraîné en analysant une pluralité d'images pré-étiquetées de sections de marqueurs de repère sectionnables conformément à un procédé d'entraînement de modèle d'apprentissage automatique prédéfini, et en ajustant un ou plusieurs attributs du modèle d'apprentissage automatique sur la base de l'analyse de la pluralité d'images pré-étiquetées de sections de marqueurs de repère sectionnables, de telle sorte que des marqueurs de repère sectionnables peuvent être détectés de manière fiable même avec des variations mineures d'une image à l'autre qui peuvent se produire en raison du traitement, du sectionnement, du placement sur la lame et/ou du balayage.

2. Procédé mis en œuvre par ordinateur (300) selon la revendication 1, dans lequel la détermination (320) de l'attribut (210) de la section du marqueur de repère sectionnable à partir de l'image reçue (204) de la section du bloc d'échantillon de tissu sectionnable comprend la détermination d'au moins l'une parmi :
au moins une longueur d'onde de lumière réfléchie par la section du marqueur de repère sectionnable ;
une forme de la section du marqueur de repère sectionnable ;
une orientation de la section du marqueur de repère sectionnable ; ou
une position de la section du marqueur de repère sectionnable dans la section du bloc d'échantillon de tissu sectionnable.

3. Procédé mis en œuvre par ordinateur (300) selon la revendication 1 ou la revendication 2, dans lequel la détermination de l'orientation (220) de la section du marqueur de repère sectionnable comprend la détermination de l'orientation (220) par rapport à au moins l'un parmi :
le bloc d'échantillon de tissu sectionnable ;
une lame d'échantillon de tissu qui comporte la section du bloc d'échantillon de tissu sectionnable ; ou
la section de l'échantillon de tissu incorporé dans la section du bloc d'échantillon de tissu sectionnable.

4. Procédé mis en œuvre par ordinateur (300) selon l'une quelconque des revendications précédentes, dans lequel la section du marqueur de repère sectionnable est formée selon une forme identifiable indiquant une direction particulière.

5. Procédé mis en œuvre par ordinateur (300) selon la revendication 4, dans lequel la forme identifiable est une forme de flèche comprenant une extrémité pointue indiquant la direction particulière.

6. Procédé mis en œuvre par ordinateur (300) selon l'une quelconque des revendications précédentes, comprenant en outre :
la réception d'une image supplémentaire (214) d'une section supplémentaire du bloc d'échantillon de tissu sectionnable, l'image supplémentaire (214) comprenant les données d'image, incorporées dans la coupe supplémentaire du bloc d'échantillon de tissu sectionnable :
de la section supplémentaire de l'échantillon de tissu (216) ; et
de la section supplémentaire du marqueur de repère sectionnable (218) ; et
la détermination de l'orientation de la section supplémentaire du marqueur de repère sectionnable en déterminant l'orientation de la section supplémentaire du marqueur de repère sectionnable par rapport à au moins l'un parmi :
le bloc d'échantillon de tissu sectionnable ;
une lame d'échantillon de tissu supplémentaire qui comporte la section supplémentaire du bloc d'échantillon de tissu sectionnable ; ou
la section supplémentaire de l'échantillon de tissu incorporé dans la section supplémentaire du bloc d'échantillon de tissu sectionnable.

7. Procédé mis en œuvre par ordinateur (300) selon la revendication 6, comprenant en outre la présentation, par l'intermédiaire de l'interface utilisateur graphique (222), des données d'image de la section supplémentaire de l'échantillon de tissu, dans lequel l'orientation des données d'image de la section supplémentaire de l'échantillon de tissu est orientée, dans l'interface utilisateur graphique (222), dans l'orientation commune, alignée sur les données d'image de la section de l'échantillon de tissu.

8. Procédé mis en œuvre par ordinateur (300) selon la revendication 7, dans lequel la présentation des données d'image de la section de l'échantillon de tissu et des données d'image de la section supplémentaire de l'échantillon de tissu alignées dans l'orientation commune comprend la superposition des données d'image de la section de l'échantillon de tissu avec les données d'image de la section supplémentaire de l'échantillon de tissu.

9. Procédé mis en œuvre par ordinateur (300) selon la revendication 8, comprenant en outre le défilement des données d'image superposées de la section de l'échantillon de tissu et de la section supplémentaire de l'échantillon de tissu.

10. Procédé mis en œuvre par ordinateur (300) selon l'une quelconque des revendications précédentes, comprenant en outre :
la réception d'une annotation à partir d'un utilisateur par rapport à une partie des données d'image de la section de l'échantillon de tissu ;
le transfert de l'annotation vers une partie correspondante des données d'image de la section supplémentaire de l'échantillon de tissu ; et
l'ajout de l'annotation transférée à un ensemble de données d'entraînement pour un modèle d'apprentissage automatique destiné à analyser des données d'image d'échantillons de tissu qui partagent au moins un attribut avec la section supplémentaire de l'échantillon de tissu.

11. Système (100) comprenant :
un module de réception (104), stocké en mémoire et configuré pour recevoir une image d'une section d'un bloc d'échantillon de tissu sectionnable, l'image comprenant des données d'image, incorporées dans la section du bloc d'échantillon de tissu sectionnable :
d'une section d'un échantillon de tissu ; et
d'une section d'un marqueur de repère sectionnable ;
un module de détermination (106), stocké en mémoire et configuré pour déterminer un attribut de la section du marqueur de repère sectionnable à partir de l'image reçue de la section du bloc d'échantillon de tissu sectionnable ; et
un module d'exécution (108), stocké en mémoire et configuré pour :
déterminer une orientation de la section du marqueur de repère sectionnable sur la base de l'attribut déterminé de la section du marqueur de repère sectionnable ; et
présenter, par l'intermédiaire d'une interface utilisateur graphique, les données d'image de la section de l'échantillon de tissu, dans lequel les données d'image de la section de l'échantillon de tissu sont orientées, dans l'interface utilisateur graphique, dans une orientation commune, alignées sur des données d'image d'une section supplémentaire de l'échantillon de tissu, qui est basée sur l'orientation déterminée de la section du marqueur de repère sectionnable et une orientation déterminée d'une section supplémentaire du marqueur de repère sectionnable associée à la section supplémentaire de l'échantillon de tissu ; et
au moins un processeur physique (130) qui exécute le module de réception (104), le module de détermination (106) et le module d'exécution (108) ; dans lequel :
le module de détermination (106) est configuré pour déterminer l'attribut (210) de la section du marqueur de repère sectionnable à partir de l'image reçue de la section du bloc d'échantillon de tissu sectionnable en analysant l'image de la section du bloc d'échantillon de tissu sectionnable conformément à un modèle d'apprentissage automatique (150) pré-entraîné pour prédire des attributs de sections de marqueurs de repère sectionnables sur la base d'images de sections de marqueurs de repère sectionnables ; et
le module de détermination (106) est configuré pour pré-entraîner le module d'apprentissage automatique (150) en analysant une pluralité d'images pré-étiquetées de sections de marqueurs de repère sectionnables conformément à un procédé d'entraînement de modèle d'apprentissage automatique prédéfini, et en ajustant un ou plusieurs attributs du modèle d'apprentissage automatique sur la base de l'analyse de la pluralité d'images pré-étiquetées de sections de marqueurs de repère sectionnables, de telle sorte que des marqueurs de repère sectionnables peuvent être détectés de manière fiable même avec des variations mineures d'une image à l'autre qui peuvent se produire en raison du traitement, du sectionnement, du placement sur la lame et/ou du balayage.

12. Système (100) selon la revendication 11, dans lequel le module de détermination (106) détermine l'attribut de la section du marqueur de repère sectionnable à partir de l'image reçue de la section du bloc d'échantillon de tissu sectionnable en déterminant au moins l'une parmi :
au moins une longueur d'onde de lumière réfléchie par la section du marqueur de repère sectionnable ;
une forme de la section du marqueur de repère sectionnable ;
une orientation de la section du marqueur de repère sectionnable ; ou
une position de la section du marqueur de repère sectionnable dans la section du bloc d'échantillon de tissu sectionnable.

13. Système (100) selon la revendication 11 ou la revendication 12, dans lequel le module d'exécution (108) détermine l'orientation (220) de la section du marqueur de repère sectionnable en déterminant l'orientation (220) par rapport à au moins l'un parmi :
le bloc d'échantillon de tissu sectionnable ;
une lame d'échantillon de tissu qui comporte la section du bloc d'échantillon de tissu sectionnable ; ou
la section de l'échantillon de tissu incorporé dans la section du bloc d'échantillon de tissu sectionnable.

14. Système (100) selon l'une quelconque des revendications 11 à 13, dans lequel la section du marqueur de repère sectionnable est formée en une forme identifiable indiquant une direction particulière.
